# EUROPEAN PATENT APPLICATION

(11) **EP 4 765 602 A1**
(43) Date of publication of application: **24.06.2026**
(21) Application number: 25224630.1
(22) Date of filing: 17.12.2025
(51) Int. Cl.: H02M 1/00, H02M 1/12, H02M 3/158

(54) **SWITCHING REGULATOR WITH COMPENSATED OUTPUT FILTER**

(30) Priority: 19.12.2024 US 202418988390
(71) Applicant: Monolithic Power Systems, Inc., Kirkland, WA 98033 (US)
(72) Inventor: Toporski, Todd, 98033 Kirkland (US); Gallardo, Angelo, 98033 Kirkland (US)
(74) Representative: Mewburn Ellis LLP

(57) **Abstract**

A switching regulator has a switching power stage circuit having a power switch coupled between an input terminal and a switch node, an output filter coupled between the switch node and an output terminal, and a feedback circuit. The power switch is controlled based on a feedback signal indicative of an output voltage. The output filter comprises a first filtering inductor, a second filtering inductor coupled in series between the switch node and the output terminal, and a first compensation network placed between the first filtering inductor and the second filtering inductor to alter the frequency response of the output filter. The feedback circuit is coupled to the output terminal to provide the feedback signal based on the output voltage.

## Description

This application claims priority to US18/988,390, filed 19 December 2024.

### TECHNICAL FIELD

The present invention generally relates to electronic circuits, and more particularly but not exclusively relates to switching regulators.

### BACKGROUND OF THE INVENTION

Switching regulators have the advantage of high efficiency compared to traditional low-dropout (LDO) regulators. Due to its switching nature, a switching regulator emits noise at its switching frequency and its harmonics. Switching regulators require stable regulation, low output noise, and tight output tolerance under extreme load conditions. Designing an output filter to meet these specifications for switching regulators, such as direct current to direct current (DC/DC) converters (including buck, boost, buck-boost and other topologies), alternating current to direct current (AC/DC) converters, and so on is very challenging.

A single-stage filter is commonly used to meet output voltage ripple specifications. For example, the single-stage filter is sufficient for applications that require no less than 1-2mV of output voltage ripple. However, for applications where it is necessary to meet both very low output voltage ripple (e.g., less than 1mV) and very fast load steps (e.g., faster than 1A/us), a new filter design is needed.

### BRIEF DESCRIPTION OF THE DRAWINGS

FIG. 1A shows a block diagram of a switching regulator 100 in accordance with an embodiment of the present invention.
FIG. 1B shows a block diagram of a switching regulator 100B in accordance with an embodiment of the present invention.
FIG. 1C shows a block diagram of a switching regulator 100C in accordance with an embodiment of the present invention.
FIG. 2 shows a schematic diagram of a switching regulator 200 in accordance with an embodiment of the present invention.
FIG. 3 shows a schematic diagram of a prior art switching regulator 300.
FIG. 4 shows a schematic diagram of a prior art switching regulator 400.
FIG. 5 shows frequency response curves 501-503 in accordance with an embodiment of the present invention.
FIG. 6 shows a schematic diagram of a switching regulator 600 in accordance with an embodiment of the present invention.
FIG. 7 shows a schematic diagram of the IC 61 in accordance with an embodiment of the present invention.
FIG. 8 shows a timing diagram 800 of the switching regulator 600 during load transient in accordance with an embodiment of the present invention.
FIG. 9 shows a noise spectrum plot for the output voltage Vo of the switching regulator 600 in accordance with an embodiment of the present invention.
FIG. 10A shows a schematic diagram of a switching regulator 1000 in accordance with an embodiment of the present invention.
FIG. 10B shows a schematic diagram of an IC 21B of the switching regulator 1000 in accordance with an embodiment of the present invention.
FIG. 11 shows a block diagram of a switching regulator 1100 in accordance with an embodiment of the present invention.
FIG. 12 shows a schematic diagram of a switching regulator 1200 in accordance with an embodiment of the present invention.
FIG. 13 shows a frequency response curve 504 of the output filters 111A in accordance with an embodiment of the present invention.
FIG. 14 illustrates a control method 1400 of a switching regulator in accordance with an embodiment of the present invention.

The use of the similar reference label in different drawings indicates the same of like components.

### SUMMARY OF THE INVENTION

It is one of the objects of the present invention to provide a switching regulator and an integrated circuit (IC) for the switching regulator.

One embodiment of the present invention discloses a switching regulator (200). The switching regulator (200) includes an input terminal (101), an output terminal (102), a switching power stage circuit (11), an output filter (12A) and a feedback circuit (14). The input terminal (101) is configured to receive an input voltage (Vin). The output terminal (102) is configured to provide an output voltage (Vo). The switching power stage circuit (11) has a power switch (S1) coupled between the input terminal (101) and a switch node (SW), where the power switch (S1) is controlled based on a difference between a reference signal (Vref) and a feedback signal (Vfb) indicative of the output voltage (Vo). The output filter (12A) is coupled between the switch node (SW) and the output terminal (102), where the output filter (12A) includes an inductance (L) filter (121A), an inductance-capacitance (LC) filter (123A) coupled in series between the switch node (SW) and the output terminal (102), and a first compensation network (122A) placed between the L filter (121A) and the LC filter (123A). The feedback circuit (14) is coupled to the output terminal (102) to provide the feedback signal (Vfb) based on the output voltage (Vo). Where the first compensation network (122A) includes a first capacitor (Cc1), a resistor (Rc) and a second capacitor (Cc2). The first capacitor (Cc1) has a first terminal and a second terminal, where the first terminal of the first capacitor (Cc1) is coupled to a compensation node (CP) formed between the L filter (121A) and the LC filter (123A). The resistor (Rc) has a first terminal and a second terminal, where the first terminal of the resistor (Rc) is coupled to the second terminal of the first capacitor (Cc1), the second terminal of the resistor (Rc) is coupled to a reference ground. The second capacitor (Cc2) has a first terminal and a second terminal, where the first terminal of the second capacitor (Cc2) is coupled to the first terminal of the resistor (Rc), and the second terminal of the second capacitor (Cc2) is coupled to the second terminal of the resistor (Rc).

Another embodiment of the present invention discloses integrated circuit (IC) (21B) for a switching regulator (1000). The IC (21B) includes an input pin (IN), a switch pin (PSW), a ground pin (GND), a compensation pin (CMP), a feedback pin (FB), a first power switch (S1), a second power switch (S2), a control circuit (13) and a compensation circuit. The input pin (IN) is configured to receive an input voltage (Vin). The switch pin (PSW) is coupled to a first terminal of a first filtering inductor (L1) to provide an output voltage (Vo). The ground pin (GND) is coupled to a reference ground. The compensation pin (CMP) is coupled to a second terminal of the first filtering inductor (L1) via a first capacitor (Cc1). The feedback pin (FB) is coupled to an output terminal (102) of the switching regulator (1000) to receive an output voltage (Vo) or a feedback signal (Vfb) indicative of the output voltage (Vo). The first power switch (S1) is coupled between the input pin (IN) and the switch pin (PSW). The second power switch (S2) is coupled between the switch pin (PSW) and the ground pin (GND). The control circuit (13) is configured to control the first power switch (S1) and the second power switch (S2) based on the output voltage (Vo). The compensation circuit is coupled to the compensation pin (CMP) to form a compensation network (122A) together with the first capacitor (Cc1). Where the compensation network (122A) is configured to alter a frequency response of an output filter (12A) formed by the first filtering inductor (L1), a second filtering inductor (L2) and the compensation network (122A), where the second filtering inductor (L2) is coupled between the second terminal of the first filtering inductor (L1) and the output terminal (102).

Yet another embodiment of the present invention discloses a switching regulator (200). The switching regulator (200) includes an input terminal (101), an output terminal (102), a switching power stage circuit (11), an output filter (12A) and a feedback circuit (14). The input terminal (101) is configured to receive an input voltage (Vin). The output terminal (102) is configured to provide an output voltage (Vo). The switching power stage circuit (11) has a power switch (S1) coupled between the input terminal (101) and a switch node (SW), where the power switch (S1) is controlled based on a feedback signal (Vfb) indicative of the output voltage (Vo). The output filter (12A) is coupled between the switch node (SW) and the output terminal (102), where the output filter (12A) includes a first filtering inductor (L1), a second filtering inductor (L2) coupled in series between the switch node (SW) and the output terminal (102), and a first compensation network (122A) placed between the first filtering inductor (L1) and the second filtering inductor (L2) to alter the frequency response of the output filter (12A). The feedback circuit (14) is coupled to the output terminal (102) to provide the feedback signal (Vfb) based on the output voltage (Vo). Where the first compensation network (122A) includes at least a compensation capacitor (Cc2) which capacitance is less than 1µF.

These and other features of the present invention will be readily apparent to people of ordinary skills in the art upon reading the entirety of this disclosure, which includes the accompanying drawings and claims.

### DETAILED DESCRIPTION

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skills in the art that the present invention may be practiced without these specific details. In other instances, well-known methods, procedures, components, and circuits have not been described in detail so as not to unnecessarily obscure aspects of the present invention.

Low output noise is required for switching regulators, especially in Advanced Driver Assistance Systems (ADAS) applications in the automotive industry, which include radar and camera systems. For instance, DC/DC converters that provide power to low-noise integrated circuits (ICs) like monolithic microwave integrated circuit (MMIC) and radio frequency (RF) circuits must have an output noise of no more than 100uV. Additionally, load transient requirements are becoming increasingly challenging. Large load current variation (e.g., from 1A to larger than 10A) occurs very quickly (e.g., at a rate faster than 1A/us) and a tight tolerance on an output voltage must be met (e.g., less than 2%). As a result, additional large filters with extra circuits for stability are necessary, resulting in complex and costly solutions. Embodiments of the present invention propose an output filter that meets these aforementioned requirements.

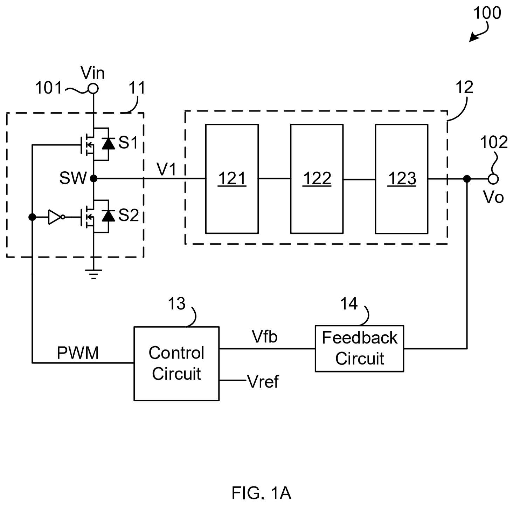

FIG. 1A shows a block diagram of a switching regulator 100 in accordance with an embodiment of the present invention. In the embodiment of FIG. 1A, the switching regulator 100 comprises an input terminal 101, an output terminal 102, a switching power stage circuit 11, and an output filter 12.

The input terminal 101 is configured to receive an input voltage Vin, and the output terminal 102 is configured to provide an output voltage Vo. The switching power stage circuit 11 has at least a power switch S1 coupled between the input terminal 101 and a switch node SW. In one embodiment, the switching power stage circuit 11 further has a power switch S2 coupled between the switch node SW and a reference ground. In one embodiment, the power switches S1 and S2 may comprise Metal Oxide Semiconductor Field Effect Transistor (MOSFET), Junction Field Effect Transistor (JFET), Insulated Gate Bipolar Transistor (IGBT), and other suitable transistors. In another embodiment, the power switch S2 may be replaced by a diode.

The output filter 12 comprises a filter 121, a compensation network 122, and a filter 123 connected in cascaded. The filter 121 is coupled to the switch node SW to receive a switch voltage VSW. The compensation network 122 is placed between the filters 121 and 123 to compensate and alter a frequency response of the output filter 12. The filter 123 is coupled to the output terminal 102 to provide the output voltage Vo. The output voltage Vo is provided by filtering the switch voltage VSW through the output filter 12. When the power switch S1 is turned on and the power switch S2 is turned off, the power switch S1 connects the switch node SW to the input terminal 101, and the switch voltage VSW is substantially equal to the input voltage Vin. When the power switch S1 is turned off and the power switch S2 is turned on, the power switch S2 connects the switch node SW to the reference ground, and the switch voltage VSW is substantially equal to a reference voltage (e.g., 0V). The output filter 12 is placed between the switch node SW and the output terminal 102 to smooth the output voltage Vo.

In one embodiment, the switching regulator 100 further comprises a feedback circuit 14. The feedback circuit 14 is coupled to the output terminal 102 to receive the output voltage Vo, and provides a feedback signal Vfb based on the output voltage Vo. The power switches S1 and S2 are controlled based on the feedback signal Vfb. For example, the power switches S1 and S2 are turned on and off alternately based on a difference between the feedback signal Vfb and a reference signal Vref. In one embodiment, the switching regulator 100 further comprises a control circuit 13. The control circuit 13 is configured to provide a switching control signal PWM to control the power switches S1 and S2 based on the feedback signal Vfb. As shown in FIG. 1A, a feedback path is formed from the output terminal 102 to the control circuit 13 through the feedback circuit 14. So that a feedback control loop is closed after the filter 123 to help stable with fast load steps and meet output tolerance. The feedback circuit 14 may be a resistor divider or a direct connection to the control circuit 13. The feedback circuit 14 may sometimes include an additional compensation component, such as a feedforward capacitor, which can add additional pole and zero to the control circuit 13.

In the embodiment of FIG. 1A, the compensation network 122 is embedded into the output filter 12 to alter the frequency response of the output filter 12, ensuring design requirements can be met. The output filter 12 shown in FIG. 1A provides more accurate frequency response than simply cascading two filters. Furthermore, the compensation network 122 is independent of the feedback path and can compensate for the output filter 12 without modifying a transfer function of the feedback control loop.

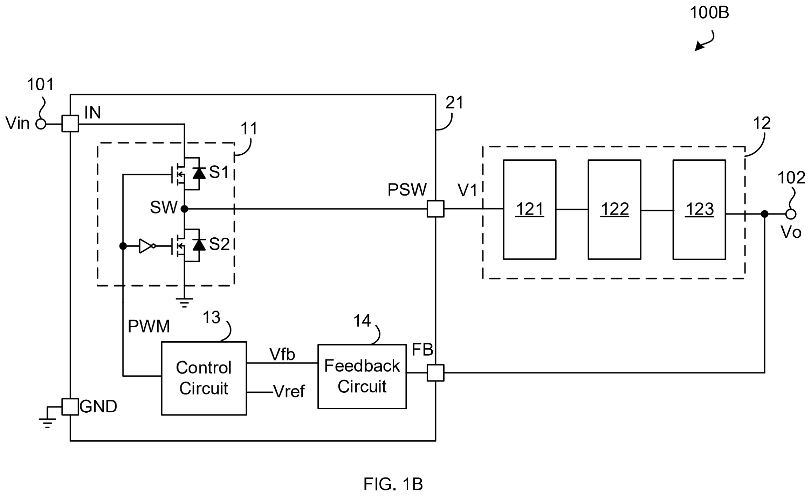

FIG. 1B shows a block diagram of a switching regulator 100B in accordance with an embodiment of the present invention. in the embodiment of FIG. 1B, the switching power stage circuit 11, the control circuit 13 and the feedback circuit 14 are integrated in an integrated circuit (IC) 21. The IC 21 has an input pin IN configured to receive the input voltage Vin, a switch pin PSW coupled to the output filter 12, a feedback pin FB coupled to the output terminal 102 to receive the output voltage Vo, and a ground pin GND coupled to the reference ground.

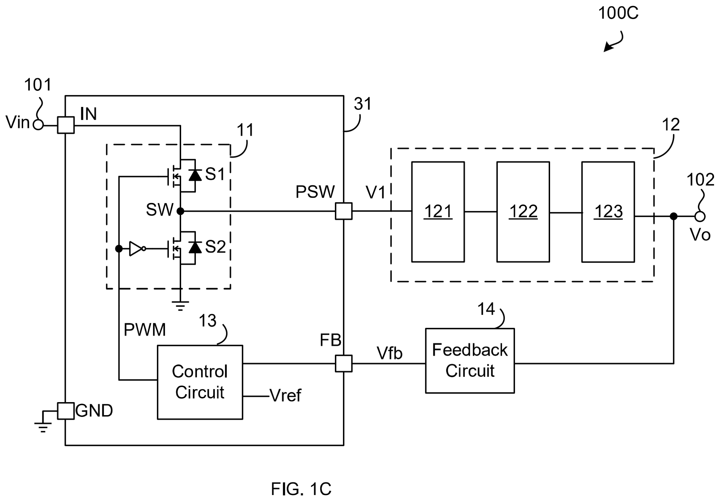

FIG. 1C shows a block diagram of a switching regulator 100C in accordance with an embodiment of the present invention. in the embodiment of FIG. 1C, the switching power stage circuit 11 and the control circuit 13 are integrated in an integrated circuit (IC) 31. The IC 31 has the input pin IN configured to receive the input voltage Vin, the switch pin PSW coupled to the output filter 12, the feedback pin FB coupled to the feedback circuit 14 to receive the feedback signal Vfb, and the ground pin GND coupled to the reference ground.

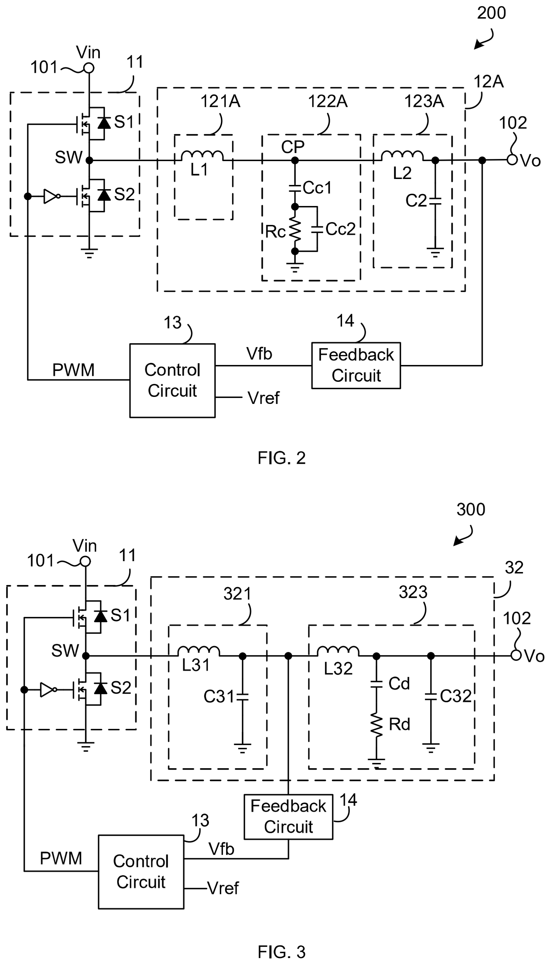

FIG. 2 shows a schematic diagram of a switching regulator 200 in accordance with an embodiment of the present invention. The switching regulator 200 is a particular embodiment of the switching regulator 100. In the embodiment of FIG. 2, the switching regulator 200 comprises the switching power stage circuit 11, the control circuit 13, the feedback circuit 14 coupled to the output terminal 102, and an output filter 12A coupled between the switch node SW and the output terminal 102.

The output filter 12A has a filtering inductor L1, a filtering inductor L2, and a compensation network 122A placed between the filtering inductors L1-L2 to alter the frequency response of the output filter 12A. The filtering inductor L1 and the filtering inductor L2 are coupled in series between the switch node SW and the output terminal 102. In one embodiment, the filtering inductor L1 forms a filter 121A, e.g., an inductance (L) filter, the filtering inductor L2 and a filtering capacitor C2 forms a filter 123A, e.g., an inductance-capacitance (LC) filter.

A first terminal of the filtering inductor L1 is coupled to the switch node SW, a second terminal of the filtering inductor L1 and a first terminal of the filtering inductor L2 are coupled together to form a compensation node CP, and a second terminal of the filtering inductor L2 is coupled to the output terminal 102. The filtering capacitor C2 is coupled between the output terminal 102 and the reference ground. In the embodiment of FIG. 2, the compensation network 122A is coupled to the compensation node CP to compensate for the output filter 12A. In the embodiment of FIG. 2, the filter 121A only includes the filtering inductor L1, eliminating the need of a filtering capacitor. As a result, both size and cost of the filter 121A are greatly reduced. In one embodiment, the filtering capacitor C2 may comprise a plurality capacitors coupled in parallel.

The compensation network 122A could use passive components with small size and accurate values to offer precision and flexibility compensate for the output filter 12A. In the embodiment of FIG. 2, the compensation network 122A has a capacitor Cc1, a resistor Rc, and a capacitor Cc2. The capacitor Cc1 has a first terminal coupled to the compensation node CP, and a second terminal. The resistor Rc has a first terminal coupled to the second terminal of the capacitor Cc1 and a second terminal coupled to the reference ground. The capacitor Cc2 is coupled in parallel with the resistor Rc, that is the capacitor Cc2 has a first terminal and a second terminal, the first terminal of the capacitor Cc2 is coupled to the second terminal of the capacitor Cc1, and the second terminal of the capacitor Cc2 is coupled to the reference ground. In one embodiment, a resistance of the resistor Rc is a few Ohms or less, a capacitance of the capacitor Cc1 is a few microFarads or less, and a capacitance of the capacitor Cc2 is typically less than a microFarad. For example, the resistance of the resistor Rc is less than 10Ohm, the capacitance of the capacitor Cc1 is less than 10µF, and the capacitance of the capacitor Cc2 is less than 1µF. One with ordinary skill in the art should also understand that the compensation network 122A could have other suitable circuit structures, not limited to the detailed embodiment of FIG. 2. The output filter proposed by embodiments of the present invention can meet requirements consisting of low output noise, maintaining stable behavior while meet tight regulation tolerance, and delivering fast load changes.

FIG. 3 shows a schematic diagram of a prior art switching regulator 300. The switching regulator 300 comprises the switching power stage circuit 11, the control circuit 13, the feedback circuit 14, and an output filter 32 coupled between the switch node SW and the output terminal 102.

Compared with the switching regulator 200, the output filter 32 comprises a filter 321 and a filter 323. The feedback pin FB is coupled to a common node of the filter 321 and the filter 323, i.e., placed after the filter 321 and before the filter 323, rather than coupled to the output terminal 102. The filter 321 has a filtering inductor L31 and a filtering capacitor C31, and the filter 323 has a filtering inductor L32 and a filtering capacitor C32. An inductance of the filtering inductor L31 should be 5-10 times larger than an inductance of the filtering inductor L32, and a capacitance of the filtering capacitor C32 should be 5-10 times larger than a capacitance of the filtering capacitor C31. This separates the poles of the filter 323 from the filter 321 to minimize peaking of a frequency response of the output filter 32 and help stability.

A dampening capacitor Cd and a dampening resistor Rd should be added to the filter 323 to reduce possible ringing and oscillation of the output voltage Vo since the feedback loop is closed before the filter 323. That is the dampening capacitor Cd and a dampening resistor Rd are not independent of the feedback path from the output terminal to the feedback circuit. A capacitance of the dampening capacitor Cd should be large enough, e.g., larger than 47µF, which results in larger capacitor size and requires more PCB space. The challenge further lies in meeting requirements for both output tolerance and fast load steps, especially difficulty to maintain stability of the switching regulator 300 during fast load steps.

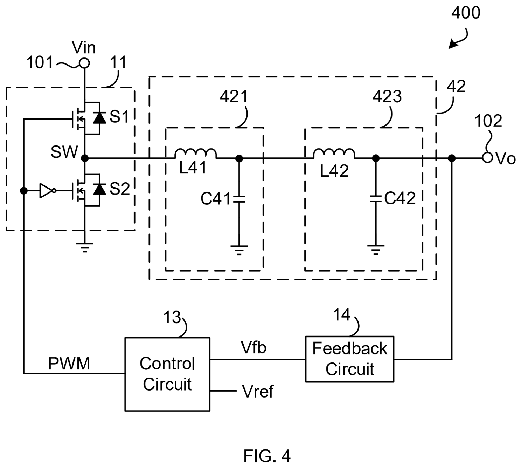

FIG. 4 shows a schematic diagram of a prior art switching regulator 400. In the embodiment of FIG. 4, the switching regulator 400 comprises the switching power stage circuit 11, the control circuit 13, the feedback circuit 14, and an output filter 42 coupled between the switch node SW and the output terminal 102. The output filter 42 comprises a filter 421 and a filter 423.

Compared with the switching regulator 200, the filter 421 has a filtering inductor L41 and a filtering capacitor C41. The filter 423 has a filtering inductor L42 and a filtering capacitor C42. In one example, the filtering inductor L41 is 100nH, the filtering capacitor C41 is 47µF, the filtering inductor L42 is 20nH, and the filtering capacitor C42 is 235µF. A cutoff frequency fc1 of the output filter 42 is set by the filtering inductor L41 and the filtering capacitor C41, and there is -40dB/decade attenuation above the cutoff frequency fc1. A cutoff frequency fc2 of the output filter 42 is set by the filtering inductor L42 and the filtering capacitor C42, and there is -40dB/decade attenuation above the cutoff frequency fc2. The cutoff frequencies fc1 and fc2 must be spaced apart sufficiently in frequency to reduce peaking of a frequency response of the output filter 41, so as to reduce oscillations and non-stability of the switching regulator 400.

The switching regulator 400 can meet the noise requirement via carefully choosing parameters of the output filter 42, but it still hard to meet requirements at fast load steps. The output filter 42 creates double poles that are close to a loop crossover frequency Fco which determines a loop bandwidth of the switching regulator 400. This creates stability challenges due to large changes in gain and phase near the loop crossover frequency Fco. To avoid this, the loop bandwidth will need to be reduced (e.g., from 200kHz to 50-100kHz), and load transient response will slow down. For a switching regulator that does not require high loop bandwidth and fast transient response, this would not be a problem. However, it is a problem for a switching regulator that needs high loop bandwidth and fast transient response. The output filter 12 and 12A shown in FIGs. 1-2 could be used for switching regulators requiring high loop bandwidth and fast transient response while reducing size and cost.

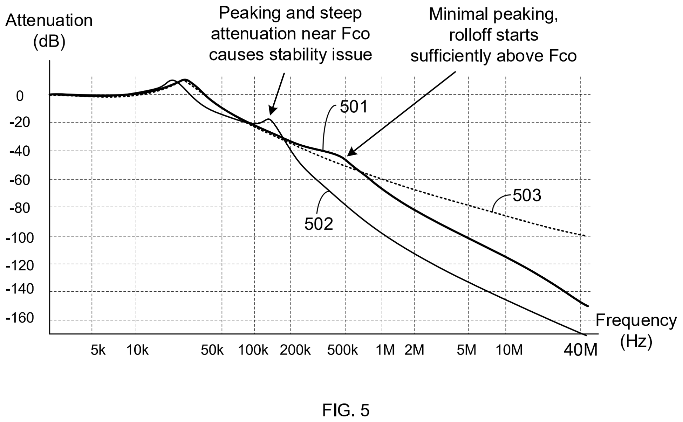

FIG. 5 shows frequency response curves 501-503 in accordance with an embodiment of the present invention. The horizontal axis represents frequency in Hz, and the vertical axis represents attenuation in dB. The frequency response curve 501 represents an attenuation characteristic of the output filter 12A shown in FIG. 2, the frequency response curve 502 represents an attenuation characteristic of the output filter 42 shown in FIG. 4, and the frequency response curve 503 represents an attenuation characteristic of a traditional single-stage LC output filter. In the embodiment of FIG. 5, the switching frequency fs is 2MHz, and the loop crossover frequency Fco is 100kHz as one example.

Consider a design that requires 80dB of noise attenuation (or -80dB) on the output at a frequency of 2MHz. For the traditional single-stage LC output filter, the frequency response curve 503 shows that the attenuation at the switching frequency fs is about -66dB, can't meet noise requirement, and needs about 14dB more attenuation. For the output filter 42, the frequency response curve 502 shows that the attenuation at the switching frequency fs is about -115dB, much more than needed. However, the filter 42 creates double poles that are close to the loop crossover frequency Fco, and it has peaking and steep attenuation near the loop crossover frequency Fco, which will cause stability issues. So the loop crossover frequency Fco needs to be reduced, which reduces the loop bandwidth and degrades the load transient response. The frequency response curve 501 shows that the output filter 12A is a best solution that offers sufficient noise reduction (the attenuation at the switching frequency fs is about -85dB), while having minimal peaking, the rolloff starts sufficiently above the loop crossover frequency Fco to allow high loop bandwidth, the switching regulator 200 could operate stable while achieving very good transient response.

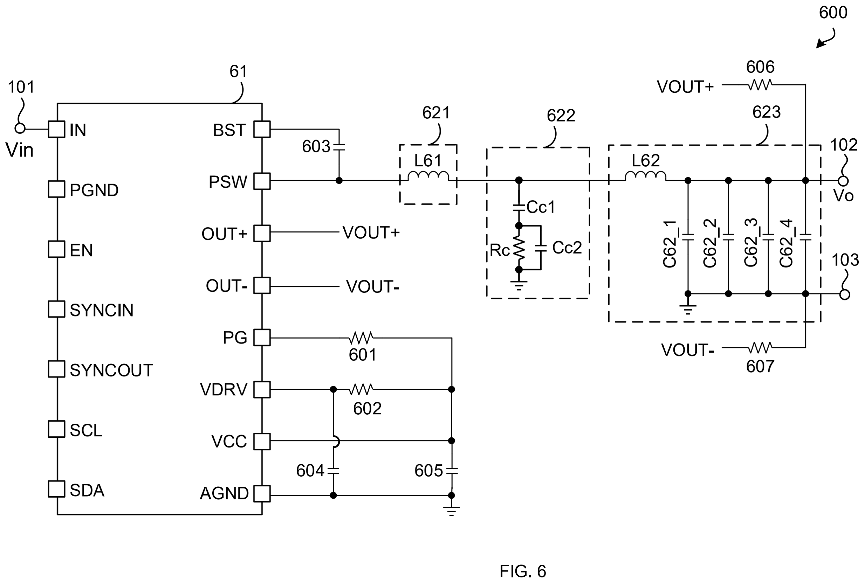

FIG. 6 shows a schematic diagram of a switching regulator 600 in accordance with an embodiment of the present invention. The switching regulator 600 has an IC 61 and an output filter comprising a filter 621, a filter 623, and a compensation network 622.

The filter 621 comprises a filtering inductor L61. The filter 623 comprises a filtering inductor L62, and a plurality of capacitors (C62_1-C62_4) coupled in parallel between the output terminal 102 and the reference ground. In one example, the filtering inductor L61 has an inductance of 100nH, the filtering inductor L62 has an inductance of 100nH, and each of the plurality of capacitors has a capacitance of 47µF. FIG. 6 shows four capacitors coupled in parallel between the output terminal 102 and the reference ground. However, more or less capacitors could be without limited by the embodiment of FIG. 6. The compensation network 622 has the capacitor Cc1, the resistor Rc, and the capacitor Cc2.

The IC 61 includes the input pin IN, the switch pin PSW, a positive differential pin OUT+, a negative differential pin OUT-, a bootstrap pin BST, a power good pin PG, a supply pin VDRV, a supply pin VCC, an analog ground pin AGND, a power ground pin PGND, an enable pin EN, a synchronize input pin SYNCIN, a synchronize output pin SYNCOUT, a serial clock pin SCL, a serial data pin SDA. The input pin IN is configured to receive the input voltage Vin, the positive differential pin OUT+ is coupled to a positive side of the capacitors C62_1-C62_4, the negative differential pin OUT- is coupled to a negative side of the capacitors C62_1-C62_4. The enable pin EN is configured to receive an enable signal to enable or shun down the IC 61. The synchronize input pin SYNCIN is configured to receive a clock signal to synchronize an internal oscillator frequency to the clock signal. The synchronize output pin SYNCOUT is configured to output a 0 degree or 180 degree out of phase clock to other devices. The bootstrap pin BST is a positive power supply for an internal power switch driver. A capacitor 603 is coupled between the bootstrap pin BST and the switch pin PSW. A capacitor 604 is coupled between the supply pin VDRV and the analog ground pin AGND, a capacitor 605 is coupled between the supply pin VCC and the analog ground pin AGND.

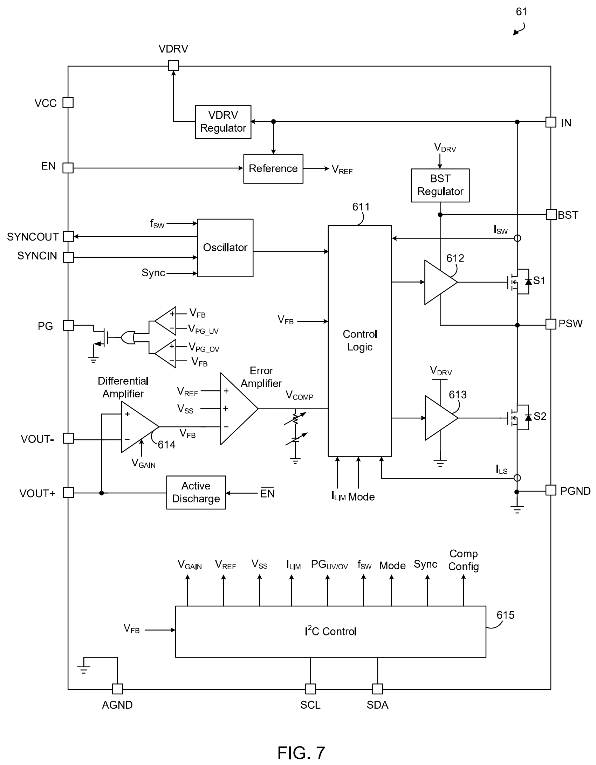

FIG. 7 shows a schematic diagram of the IC 61 in accordance with an embodiment of the present invention. As shown in FIG. 7, the power switches S1 and S2 are integrated in the IC 61. The power switch S1 has a first terminal coupled to the input pin IN, a second terminal coupled to the switch pin PSW, and a control terminal coupled to a driver 612. The switch S2 has a first terminal coupled to the switch pin PSW, a second terminal coupled to the power ground pin PGND, and a control terminal coupled to a driver 613. A control logic 611 is configured to control the power switch S1 via the driver 612 and control the power switch S2 via the driver 613. A differential amplifier 614 is coupled to the positive differential pin OUT+ and the negative differential pin OUT-, and provides the feedback signal Vfb based on the output voltage Vo. The IC 61 further comprises a communication interface 615 coupled to the serial clock pin SCL and the serial data pin SDA.

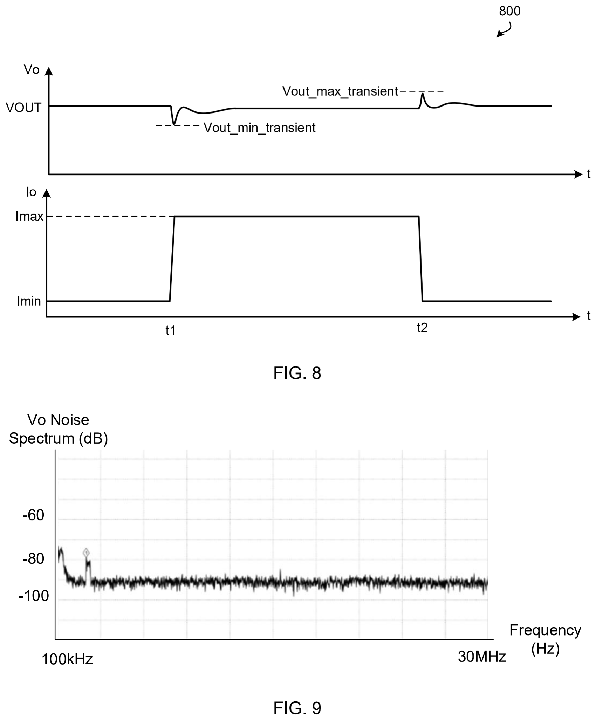

FIG. 8 shows a timing diagram 800 of the switching regulator 600 during load transient in accordance with an embodiment of the present invention. The timing diagram 800 shows the output voltage Vo and the output current lo. In one example, the output voltage Vo is VOUT at steady state, and the switching frequency fs is 2.2MHz. At time t1, the load current lo steps up from Imin to Imax with 3A/us slew rate. Then during the load step up transient, the output voltage Vo decreases to a voltage less than or equal to Vout_min_transient with excursion less than 2% of VOUT. At time t2, the load current lo steps down from Imax to Imin with 3A/us slew rate. Then during the load step down transient, the output voltage Vo increases to Vout_max_transient, with excursion less than 2% of VOUT.

FIG. 9 shows a noise spectrum plot for the output voltage Vo of the switching regulator 600 in accordance with an embodiment of the present invention. The horizontal axis represents the frequency range from 100kHz to 30MHz, while the vertical axis represents the level of Vo noise across the frequency range and is shown in decibels (dB). As seen in FIG. 9, the level of measured Vo noise is less than -80dB at 2MHz switching frequency. Above 2MHz the level of noise cannot be measured because it is very low. The present invention successfully attenuates noise at 2MHz and higher frequencies to meet stringent noise requirements of -80dB or less.

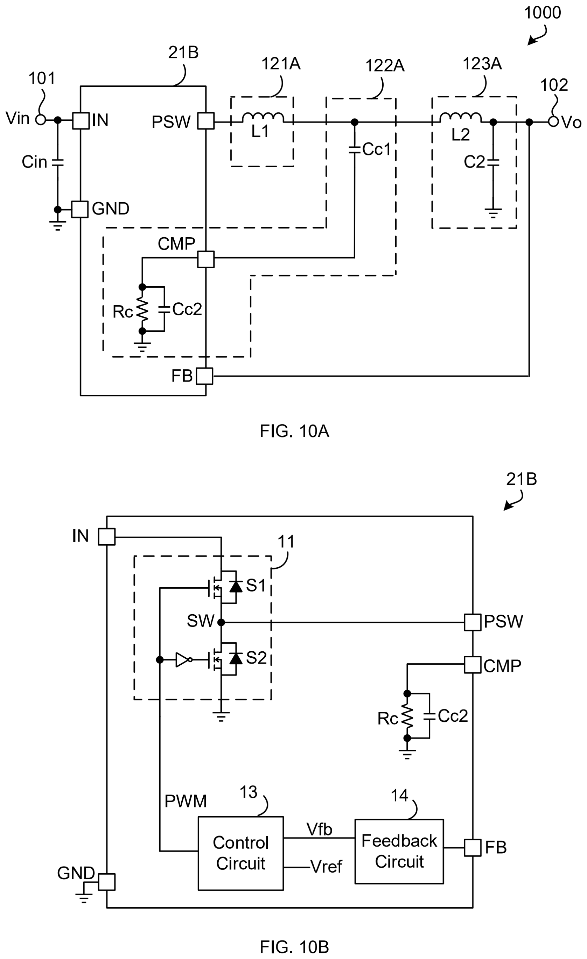

FIG. 10A shows a schematic diagram of a switching regulator 1000 in accordance with an embodiment of the present invention. FIG. 10B shows a schematic diagram of an IC 21B of the switching regulator 1000 in accordance with an embodiment of the present invention.

Compared with the switching regulator 100B, part of the compensation network 122A is integrated into the IC 21B. For example, the capacitor Cc2 and the resistor Rc are integrated into the IC 21B, and the IC 21B further has a compensation pin CMP coupled to the second terminal of the capacitor Cc1. The first terminal of the capacitor Cc2 and the first terminal of the resistor Rc are coupled to the compensation pin CMP, and the second terminal of the capacitor Cc2 and the second terminal of the resistor Rc are coupled to the ground pin GND.

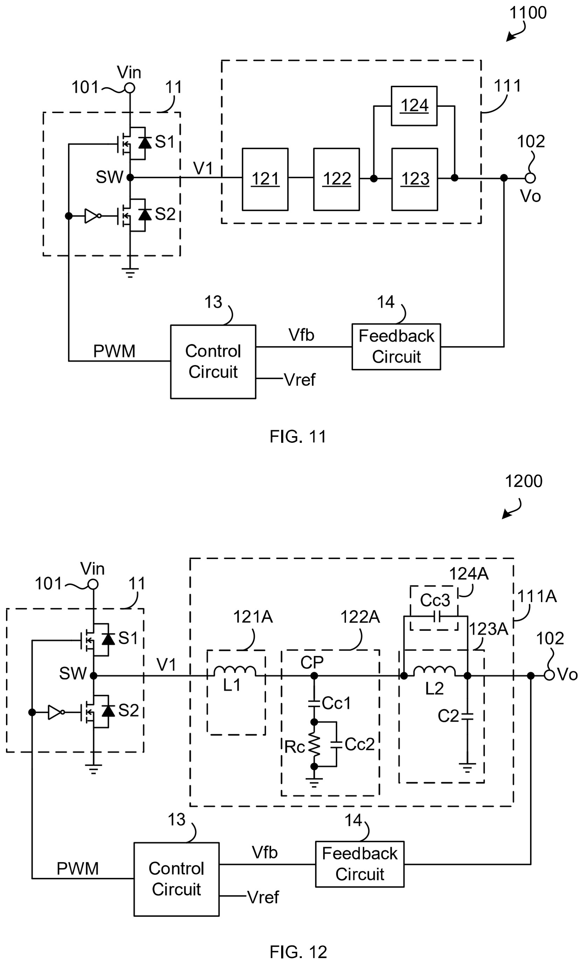

FIG. 11 shows a block diagram of a switching regulator 1100 in accordance with an embodiment of the present invention. An output filter 111 of the switching regulator 1100 further comprises a compensation network 124 coupled in parallel with the filter 123. The compensation networks 124 and 122 are employed to alter the transfer function and behavior of the output filter 111. Same as the embodiment of FIG. 1A, the compensation network 122 is placed between the filters 121 and 123, and comprises small components. The compensation network 124 has at least one small component. In one embodiment, the switching power stage circuit 11, the control circuit 13 and the feedback circuit 14 could be integrated in the IC 21 as shown in FIG. 1B. In another embodiment, the switching power stage circuit 11 and the control circuit 13 could be integrated in the IC 31 as shown in FIG. 1C.

FIG. 12 shows a schematic diagram of a switching regulator 1200 in accordance with an embodiment of the present invention. The switching regulator 1200 is a particular embodiment of the switching regulator 1100. The switching regulator 1200 has an output filter 111A which is a particular embodiment of the output filter 111. The output filter 111A comprises the filter 121A, the filter 123A, the compensation network 122A placed between the filter 121A and the filter 123A, and a compensation network 124A connected in parallel with the filter 123A. In the embodiment of FIG. 12, the compensation network 124 comprises a capacitor Cc3. In one example, a capacitance of the capacitor Cc3 is 33nF.

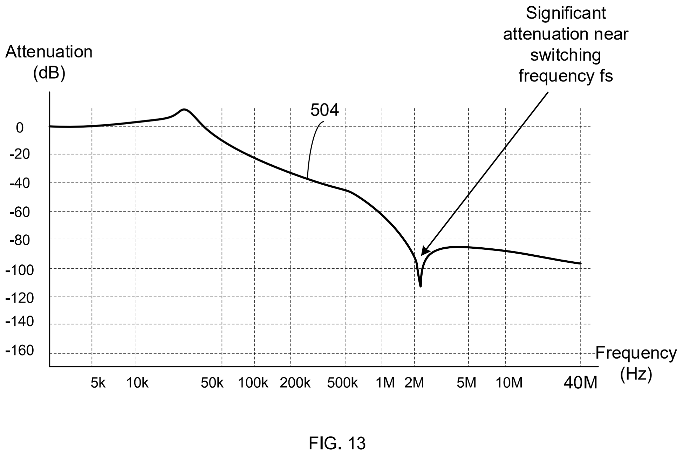

FIG. 13 shows a frequency response curve 504 of the output filters 111A in accordance with an embodiment of the present invention. The horizontal axis represents frequency in Hz, and the vertical axis represents attenuation in dB. In the embodiment of FIG. 13, the switching frequency fs is 2MHz, and the loop crossover frequency Fco is 100kHz as one example. As shown by the frequency response curve 504, the compensation network 124A further provides significant attenuation near the switching frequency fs.

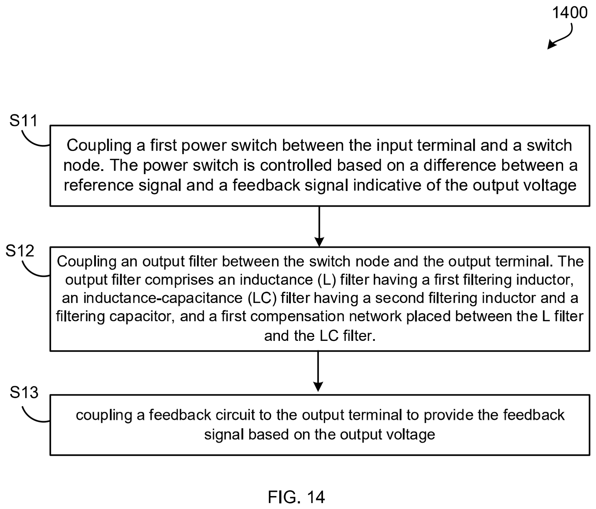

FIG. 14 illustrates a control method 1400 of a switching regulator in accordance with an embodiment of the present invention. The switching regulator has an input terminal and an output terminal. The input terminal receives an input voltage, and the output terminal provides an output voltage. The control method 1400 has steps S11- S13.

In the step S11, coupling a first power switch between the input terminal and a switch node. The power switch is controlled based on a difference between a reference signal and a feedback signal indicative of the output voltage.

In the step S12, coupling an output filter between the switch node and the output terminal. The output filter comprises an inductance (L) filter having a first filtering inductor, an inductance-capacitance (LC) filter having a second filtering inductor and a filtering capacitor, and a first compensation network placed between the L filter and the LC filter.

In the step S13, coupling a feedback circuit to the output terminal to provide the feedback signal based on the output voltage.

In one embodiment, the control method 1400 further comprises coupling a second compensation network in parallel with the second filtering inductor.

Note that in the control method 1400 described above, the box functions may also be implemented with different order as shown in FIG. 14. Two successive box functions may be executed meanwhile, or sometimes the box functions may be executed in a reverse order.

Consequently, many modifications and variations of the present invention are possible in light of the above teachings. It is therefore to be understood that within the scope of the appended claims the invention may be practiced otherwise than as specifically described. It should be understood, thus, that the foregoing disclosure relates only to a preferred embodiment (or embodiments) of the invention and that numerous modifications may be made therein without departing from the spirit and the scope of the invention as set forth in the appended claims. Various modifications are contemplated, and they obviously will be resorted to by those skilled in the art without departing from the spirit and the scope of the invention as hereinafter defined by the appended claims as only a preferred embodiment(s) thereof has been disclosed.

## Claims

1. A switching regulator (200), comprising:
an input terminal (101) configured to receive an input voltage (Vin);
an output terminal (102) configured to provide an output voltage (Vo);
a switching power stage circuit (11) having a power switch (S1) coupled between the input terminal (101) and a switch node (SW), wherein the power switch (S1) is controlled based on a difference between a reference signal (Vref) and a feedback signal (Vfb) indicative of the output voltage (Vo);
an output filter (12A) coupled between the switch node (SW) and the output terminal (102), wherein the output filter (12A) comprises an inductance (L) filter (121A), an inductance-capacitance (LC) filter (123A) coupled in series between the switch node (SW) and the output terminal (102), and a first compensation network (122A) placed between the L filter (121A) and the LC filter (123A); and
a feedback circuit (14) coupled to the output terminal (102) to provide the feedback signal (Vfb) based on the output voltage (Vo); wherein
the first compensation network (122A) comprises:
a first capacitor (Cc1) having a first terminal and a second terminal, wherein the first terminal of the first capacitor (Cc1) is coupled to a compensation node (CP) formed between the L filter (121A) and the LC filter (123A);
a resistor (Rc) having a first terminal and a second terminal, wherein the first terminal of the resistor (Rc) is coupled to the second terminal of the first capacitor (Cc1), the second terminal of the resistor (Rc) is coupled to a reference ground; and
a second capacitor (Cc2) having a first terminal and a second terminal, wherein the first terminal of the second capacitor (Cc2) is coupled to the first terminal of the resistor (Rc), and the second terminal of the second capacitor (Cc2) is coupled to the second terminal of the resistor (Rc).

2. The switching regulator (200) of claim 1, wherein a resistance of the resistor (Rc) is less than 10Ohm, a capacitance of the first capacitor (Cc1) is less than 10µF, and a capacitance of the second capacitor (Cc2) is less than 1µF.

3. The switching regulator (200) of claim 1, wherein the frequency response (501) of the output filter (12A) having a rolloff which starts at or above a crossover frequency (Fco) of the switching regulator (200).

4. The switching regulator (200) of claim 3, wherein the crossover frequency (Fco) is no less than 200kHz.

5. The switching regulator (200) of claim 1, wherein the L filter (121A) is formed by a first filtering inductor (L1); and the LC filter (123A) is formed by a second filtering inductor (L2) and a filtering capacitor (C2).

6. The switching regulator (200) of claim 5, further comprising a second compensation network (124A) coupled in parallel with the second filtering inductor (L2).

7. The switching regulator (200) of claim 6, wherein the second compensation network (124A) comprises a third capacitor (Cc3) having a first terminal and a second terminal, wherein the first terminal of the third capacitor (Cc3) is coupled to a first terminal of the second filtering inductor (L2), and the second terminal of the third capacitor (Cc3) is coupled to a second terminal of the second filtering inductor (L2).

8. An integrated circuit (IC) (21B) for a switching regulator (1000), the IC (21B) comprising:
an input pin (IN) configured to receive an input voltage (Vin);
a switch pin (PSW) coupled to a first terminal of a first filtering inductor (L1) to provide an output voltage (Vo);
a ground pin (GND) coupled to a reference ground;
a compensation pin (CMP) coupled to a second terminal of the first filtering inductor (L1) via a first capacitor (Cc1);
a feedback pin (FB) coupled to an output terminal (102) of the switching regulator (1000) to receive an output voltage (Vo) or a feedback signal (Vfb) indicative of the output voltage (Vo);
a first power switch (S1) coupled between the input pin (IN) and the switch pin (PSW);
a second power switch (S2) coupled between the switch pin (PSW) and the ground pin (GND);
a control circuit (13) configured to control the first power switch (S1) and the second power switch (S2) based on the output voltage (Vo); and
a compensation circuit coupled to the compensation pin (CMP) to form a compensation network (122A) together with the first capacitor (Cc1); wherein
the compensation network (122A) is configured to alter a frequency response of an output filter (12A) formed by the first filtering inductor (L1), a second filtering inductor (L2) and the compensation network (122A), wherein the second filtering inductor (L2) is coupled between the second terminal of the first filtering inductor (L1) and the output terminal (102).

9. The integrated circuit (21B) of claim 8, wherein the compensation circuit comprises a resistor (Rc) and a second capacitor (Cc2) coupled in parallel between the compensation pin (CMP) and the ground pin (GND).

10. The integrated circuit (21B) of claim 9, wherein a resistance of the resistor (Rc) is less than 100hm, and a capacitance of the second capacitor (Cc2) is less than 1µF.

11. A switching regulator (200), comprising:
an input terminal (101) configured to receive an input voltage (Vin);
an output terminal (102) configured to provide an output voltage (Vo);
a switching power stage circuit (11) having a power switch (S1) coupled between the input terminal (101) and a switch node (SW), wherein the power switch (S1) is controlled based on a feedback signal (Vfb) indicative of the output voltage (Vo);
an output filter (12A) coupled between the switch node (SW) and the output terminal (102), wherein the output filter (12A) comprises a first filtering inductor (L1), a second filtering inductor (L2) coupled in series between the switch node (SW) and the output terminal (102), and a first compensation network (122A) placed between the first filtering inductor (L1) and the second filtering inductor (L2) to alter the frequency response of the output filter (12A); and
a feedback circuit (14) coupled to the output terminal (102) to provide the feedback signal (Vfb) based on the output voltage (Vo); wherein
the first compensation network (122A) comprises at least a compensation capacitor (Cc2) which capacitance is less than 1µF.

12. The switching regulator (200) of claim 11, wherein the first compensation network (122A) further comprises:
a first capacitor (Cc1) having a first terminal and a second terminal, wherein the first terminal of the first capacitor (Cc1) is coupled to a compensation node (CP) formed between the first filtering inductor (L1) and the second filtering inductor (L2); and
a resistor (Rc) having a first terminal and a second terminal, wherein the first terminal of the resistor (Rc) is coupled to the second terminal of the first capacitor (Cc1), the second terminal of the resistor (Rc) is coupled to a reference ground; wherein
the compensation capacitor (Cc2) has a first terminal and second terminal, the first terminal of the compensation capacitor (Cc2) is coupled to the first terminal of the resistor (Rc), and the second terminal of the compensation capacitor (Cc2) is coupled to the second terminal of the resistor (Rc).

13. The switching regulator (200) of claim 11, further comprising:
a control circuit (13) configured to provide a switching control signal (PWM) to control the power switch (S1) based on the feedback signal (Vfb); wherein
the switching power stage circuit (11), the control circuit (13) and a part of the first compensation network (122A) are integrated in an integrated circuit (21B).

14. The switching regulator (200) of claim 11, wherein the output filter (12A) further comprises a second compensation network (124A) coupled in parallel with the second filtering inductor (L2) to alter the frequency response of the output filter (12A).

15. The switching regulator (200) of claim 14, wherein the second compensation network (124A) comprises a second capacitor (Cc3) having a first terminal and a second terminal, wherein the first terminal of the second capacitor (Cc3) is coupled to a first terminal of the second filtering inductor (L2), and the second terminal of the second capacitor (Cc3) is coupled to a second terminal of the second filtering inductor (L2).
